# EUROPÄISCHE PATENTSCHRIFT

(11) **EP 1 534 588 B1**
(45) Veröffentlichungstag und Bekanntmachung des Hinweises auf die Patenterteilung: **03.01.2007**
(21) Anmeldenummer: 03793598.8
(22) Anmeldetag: 01.09.2003
(51) Int. Cl.: B64C 1/14

(54) **FLUGZEUGTÜR MIT EINER ÖFFNUNGSMECHANIK UND EINER VORRICHTUNG ZUM WARNEN VOR DIFFERENZDRUCK BEIM ÖFFNEN DER DRUCKBEAUFSCHLAGTEN FLUGZEUGTÜR**
AIRCRAFT DOOR WITH OPENING MECHANISM AND DEVICE FOR WARNING OF DIFFERENTIAL PRESSURE DURING THE OPENING OF THE PRESSURISED AIRCRAFT DOOR
PORTE D'AVION AVEC MECANISME D'OUVERTURE ET DISPOSITIF POUR AVERTIR D'UNE PRESSION DIFFERENTIELLE LORS DE L'OUVERTURE DE LA PORTE D'AVION SOUS PRESSION

(30) Priorität: 03.09.2002 DE 10240511; 25.06.2003 DE 10328431
(43) Veröffentlichungstag der Anmeldung: 01.06.2005
(73) Patentinhaber: Airbus Deutschland GmbH, 21129 Hamburg (DE)
(72) Erfinder: PUSCHMANN, Carsten, 21147 Hamburg (DE); LESSAT, Wolfgang, 22305 Hamburg (DE); HASSE, Jens, 22607 Hamburg (DE)
(74) Vertreter: Hansmann, Dierk
(86) Internationale Anmeldenummer: PCT/DE2003/002906
(87) Internationale Veröffentlichungsnummer: WO 2004/022425

(56) Entgegenhaltungen:
- US-A- 1 895 394
- US-A- 5 337 977

## Beschreibung

Die Erfindung betrifft eine Flugzeugtür mit einer Öffnungsmechanik und einer Vorrichtung zum Warnen vor Differenzdruck beim Öffnen der druckbeaufschlagten Flugzeugtür.

Flugzeugtüren mit einer Öffnungsmechanik sind aus US-A-5 337 977 bekannt. Für Flugzeugtüren, welche nach einer Landung auch bei einem Druckunterschied zwischen Kabine (Seite des höheren Drucks) und Umgebung (Seite des niedrigeren Drucks) durch eine Handkraft zu öffnen sind, besteht die Gefahr, daß der Bediener der Tür durch deren rasche Öffnungsbewegung oder auch durch den sich einstellenden Luftstrom von der Kabine nach außen zu Schaden kommt. Unfälle belegen, daß derartige Gefährdungen auftreten können. Um dies zu verhindern, gibt es beispielsweise in Passagierflugzeugen einen elektrisch betriebenen optischen Warnmechanismus bestehend aus einer roten Lampe im Fensterbereich der Tür, welcher bei einem vorhandenen Differenzdruck und deaktivierter Notrutschenauslösung zu blinken beginnt. Dem Bediener soll so signalisiert werden, daß eine Betätigung der Tür potentiell gefährlich ist und so lange unterbleiben sollte, bis der Druckausgleich stattgefunden hat. Dies ist für ein normales Verlassen des Flugzeuges unbedenklich. Für den Fall einer Notevakuierung des Flugzeuges, bei der alle Insassen innerhalb von 90 Sekunden das Flugzeug verlassen haben müssen, würden ungeschulte Personen wie Passagiere die Betätigung der Türen aufgrund der blinkenden Warnlampe unterlassen. Die Konsequenz daraus wäre eine stark verzögerte Evakuierung.

Weiterhin ist durch die notwendige elektrische Energieversorgung die Warnfunktion der blinkenden Lampe auf Szenarien beschränkt, in welchen eine Stromversorgung aus dem Bordnetz oder einer autonomen Versorgungsquelle zu Verfügung steht.

In US-A-1 895 394 ist eine Differenzdruckwarneinrichtung beschrieben. Diese Warneinrichtung ist für die Installation in Gasleitungen vorgesehen.

Aufgabe der vorliegenden Erfindung ist es demnach, eine elektrisch unabhängige und zuverlässige Vorrichtung zu konstruieren, welche geschulten Personen in direkter Abhängigkeit von der Bedienung des Türöffnungsmechanismus einer Flugzeugtür einen vorhandenen Differenzdruck anzeigt. Damit soll eine Möglichkeit geschaffen werden, ein Ablassen des Druckes zu veranlassen.

Gleichzeitig darf die Vorrichtung in einer Notsituation nicht die Bedienung des Türöffnungsmechanismus beeinträchtigen, um eine rasche Evakuierung aller Insassen im Notfall zu ermöglichen.

Diese Aufgabe wird erfindungsgemäß durch die im Patentanspruch 1 genannten Maßnahmen gelöst. Mit der erfindungsgemäßen Warnvorrichtung wird ein akustisches Warnsignal erzeugt, welches durch den Druckausgleich zwischen

Kabine und Umgebung ausgelöst wird. Das akustische Signal wird durch ein Ventil erzeugt, dessen Öffnen und Schließen durch die Bedienung des Türöffnungsmechanismus gesteuert wird. Dabei ist nach Anspruch 1 insbesondere vorteilhaft, daß die Anlage ohne elektrische Stromversorgung auskommt und völlig autark arbeitet. Das Wahrnehmen des Signals ist nicht richtungsgebunden, das heißt eine bestimmte Ausrichtung des Körpers um die Warnung wahrzunehmen, ist nicht erforderlich. Die Warnung wird ebenfalls nicht durch Lichtverhältnisse zu unterschiedlichen Tageszeiten oder schlechte Beleuchtungsverhältnisse beeinträchtigt. Ein erheblicher Vorteil ist, daß die Warnung direkt gekoppelt ist an eine Bedienungshandlung an der zu öffnenden Tür.

Überdies werden Fehlmeldungen ausgeschlossen und die Warnvorrichtung erreicht eine sehr hohe Zuverlässigkeit.

Die Kopplung der Ventilöffnung an die Betätigung des Türöffnungsmechanismus unabhängig von der Stellung der Notrutschenauslösung der Flugzeugtür erlaubt dem Bediener (Flugbegleiter) ein Erkennen des Wirkzusammenhangs und ein Veranlassen der Öffnung der Auslaßventile des Flugzeuges. Hierdurch erhöht sich die Sicherheit für das Kabinenpersonal deutlich.

Gleichzeitig wird die Evakuierungsfähigkeit des Flugzeuges nicht eingeschränkt, da ein Öffnen der Tür auch bei aktivierter Notrutsche möglich ist.

Ein weiterer Vorteil dieser Lösung ist die Möglichkeit, insbesondere für schon in Dienst befindliche Flugzeuge die erfindungsgemäße Warnvorrichtung zusätzlich oder alternativ zu bereits bestehenden Warnmechanismen an den Flugzeugtüren nachrüsten zu können.

Weiterbildungen und vorteilhafte Ausgestaltungen der Erfindung sind in den Ansprüchen 2 bis 19 angegeben. Weitere Einzelheiten und Vorteile ergeben sich aus der nachfolgenden Beschreibung von Ausführungsbeispielen der Erfindung.

In den Unteransprüchen 2 und 3 sind Möglichkeiten für eine akustische Warnung eines Bedieners einer Flugzeugtür genannt.

Die Unteransprüche 4 bis 7 ermöglichen ein rechtzeitiges Unterbrechen des Öffnungsvorganges der Flugzeugtür, wenn ein Differenzdruck auftritt und die Warnvorrichtung im direkten Zusammenhang mit der Öffnungsmechanik funktioniert. Mit dem Vorsehen eines zweistufigen Ablaufs des Öffnungsvorganges, wobei die Kopplung der Ventilöffnung mit der ersten Stufe verbunden ist, beispielsweise durch Betätigen oder Entfernen eine Klappe, ist es sichergestellt, daß ein ungewolltes Öffnen bei einer vorhandenen Druckdifferenz verhindert wird.

Die Unteransprüche 8 und 9 zeigen alternative Anordnungsmöglichkeiten der Warnvorrichtung im Türbereich eines Flugzeugrumpfes.

Die vorteilhafte Weiterbildung gemäß des Anspruchs 10 ermöglicht eine Warnfunktion nicht nur auf akustischem Wege, sondern auch durch das Fühlen einer zielgerichteten Luftströmung.

Im Unteranspruch 11 sind Ausbildungen einer Luftführung im Flugzeugtürbereich angegeben.

Mit dem Anschluß der Warnvorrichtung an den Außenhandhebelkasten gemäß der Ansprüche 12 bis 14 kann ein Loch in der Beplankung der Tür vermieden werden.

Weiterhin ist die Anordnung des Steuerungshebels in Wirkverbindung mit dem Ventil gemäß der Ansprüche 15 bis 19 von hoher Bedeutung. Durch die Art und die Anordnung des verwendeten Dichtgummis und der weiteren Ventilbestandteile gemäß der Ansprüche 15 bis 17 wird erreicht, daß das Ventil sicher verschlossen ist und ein vorhandener Differenzdruck stets das Dichtgummi belastet und somit die Ausströmöffnung im Ventil sicher verschließt sowie das Öffnen des Ventils mit einem akustischen Signal verbunden ist, wenn ein Differenzdruck besteht. Ebenso von Vorteil ist der entstehende Geräuschpegel bei der Erzeugung des Zischens / Rauschens hinter der Türinnenverkleidung, da hierdurch auf einen Durchbruch zur Weiterleitung des Geräusches verzichtet werden kann. Die Schallisolierung der Tür wird also nicht beeinträchtigt.

Durch die vorgeschlagene Anordnung nach den Ansprüchen 18 und 19 wird sichergestellt, daß der Verriegelungsvorgang der Tür durch die Warnvorrichtung nicht beeinträchtigt wird, sondern ihn zusätzlich zu den bereits vorhandenen Elementen noch unterstützt sowie beim Öffnungsvorgang noch ausreichend Reaktionszeit für einen Benutzer zur Verfügung steht.

In der Zeichnung sind Ausführungsbeispiele der Erfindung dargestellt, welche nachstehend anhand der Figuren 1 bis 7 näher beschrieben werden. In den Figuren sind gleiche Bauteile mit gleichen Bezugszeichen versehen.

Es zeigen:
- Figur 1: die schematische Ansicht einer erfindungsgemäßen Vorrichtung zum Warnen in einer ersten Ausführungsform,
- Figur 1A: eine Ausgestaltung der ersten Ausführungsform der Warnvorrichtung gemäß Fig. 1,
- Figur 2: die Innenansicht einer Passagiertür mit einer vorhandenen Türöffnungsmechanik, wobei der Schnitt A1-A1 sich auf einen möglichen Einbauort für die Vorrichtung zum Warnen in einer zweiten Ausführungsform als pneumatischer Restdruckanzeiger bezieht,
- Figur 3: den gesamten Mechanismus des pneumatischen Restdruckanzeigers am Einbauort in einer Schnittdarstellung, die in Figur 2 mit Schnitt A1-A1 bezeichnet ist,
- Figur 4: das Detail Z gemäß Figur 3 mit der Darstellung eines Ventils zur Steuerung eines akustischen Warnsignals in geschlossener Position sowie der zur Steuerung notwendige Hebel auf der Verriegelungswelle,
- Figur 5: das Detail Z gemäß Figur 3 mit der Darstellung des Ventils zur Steuerung des Warnsignals in geöffneter Stellung,
- Figur 6: die Draufsicht auf einen unteren Flansch mit einer Durchlaßöffnung am Außenhandhebelkasten und
- Figur 7: die Draufsicht und eine weitere Schnittansicht vom geschlossenen Ventil und dem Steuerhebel.

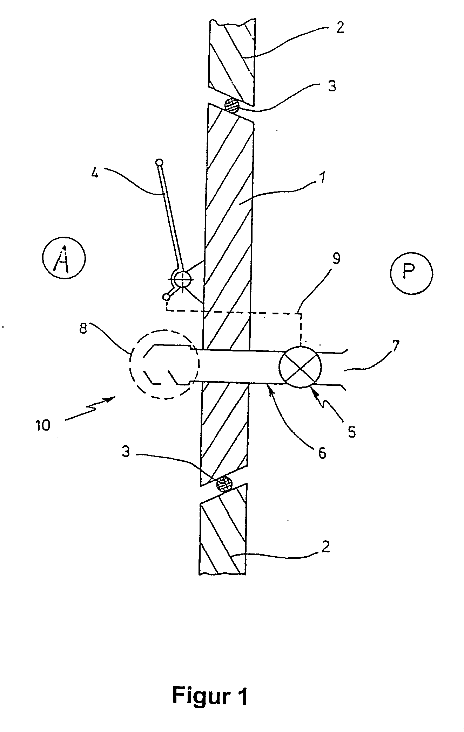

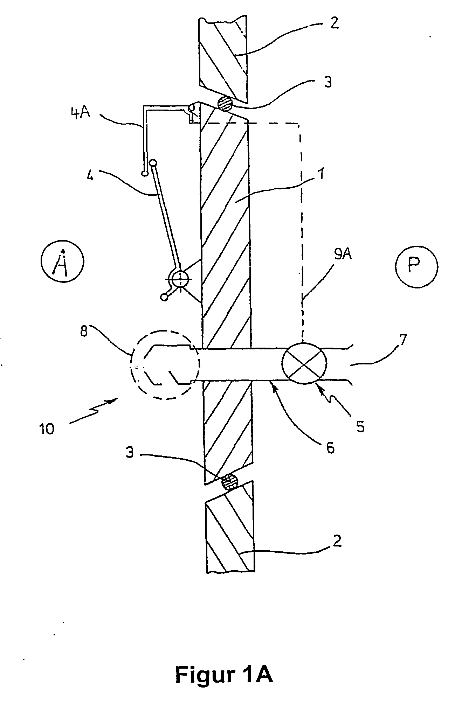

In der Figur 1 ist schematisch eine erfindungsgemäße Vorrichtung zum Warnen 10 in einer ersten Ausführungsform - ausgebildet als akustische Restdruck- Warnanlage mit einem Bedienungshebel an der Außenseite eines Flugzeuges - dargestellt. Die Warnanlage 10 ist in dem gezeigten ersten Ausführungsbeispiel in eine Tür 1 integriert, was insbesondere den Vorteil bietet, daß keine weiteren Installationen außerhalb der Tür 1 in einer Rahmenstruktur notwendig sind. Statt einer Tür 1 sind auch andere Öffnungen, wie beispielsweise Fenster oder Klappen denkbar, die Schließmechanismen aufweisen und an denen eine Druckdifferenz auftreten kann. Die Tür 1, ein Türrahmen 2 und eine Dichtung 3 bilden die Barriere zwischen dem niedrigen Druck (Außenumgebung A) und dem höheren Druck (Passagierkabine P). Beispielsweise sind Flugzeugtüren derartig aufgebaut. Eine notwendigerweise vorhandene Türaufhängung und eine ebenfalls notwendigerweise vorhandene Tür-Verriegelungsmechanik sind in dieser Ausführungsform nicht mit dargestellt. Auch nach der Landung des Flugzeuges kann noch eine Druckdifferenz zwischen Passagierkabine und der Umgebung auftreten. Die gezeigte Tür 1 hat eine Öffnungsrichtung hin zu dem niedrigeren Druck (Außenumgebung A), was zum Schutz für den Bediener eine Warnanlage 10 erforderlich macht. Die Warnanlage 10 kann nicht nur auf der Seite mit dem niedrigeren Druck A angeordnet sein, sondern bedarfsweise auch beidseitig oder auf der mit höherem Druck (P) beaufschlagten Seite. Die erfindungsgemäße Restdruck-Warnanlage 10 besteht aus einem Lufteinlaß 7, einem Ventil 5, einer Luftführung 6 in der Ausgestaltung eines Verbindungsrohres und einer Pfeife 8. Das Ventil 5 ist über eine mechanische Verbindung 9 mit einem Türbedienhebel 4 verbunden. In der gezeigten Darstellung ist der Türbedienhebel 4 auf der Seite des niedrigeren Druckes (A) angebracht, es sind jedoch genauso Ausführungen möglich, die den Türbedienhebel 4 auf der Seite des höheren Druckes (P) vorsehen. Weiterhin sind Ausführungen denkbar, die je einen Bedienhebel 4 auf beiden Seiten der Tür 1 aufweisen. Die Energie, die zum Erzeugen der Warnung notwendig ist, wird aus der Druckdifferenz zwischen P und A gewonnen. Dieses Prinzip beinhaltet den Vorteil, daß die Vorrichtung zum Warnen deaktiviert ist, wenn kein Differenzdruck auftritt. Es ist weiterhin von Vorteil, daß die Anlage 10 ohne eine Energiequelle auskommt und völlig autark arbeitet.

Eine Anordnung der Vorrichtung 10 auch neben der Tür 1, d.h. möglicherweise im Türrahmen 2 oder in (nicht gezeigten) Wandelementen im Türbereich sind ebenfalls als Ausführungsformen denkbar.

Die Wirkungsweise der Warnanlage 10 wird nachfolgend beschrieben:

Das Ventil 5 ist bei geschlossener und verriegelter Tür 1 geschlossen. Wenn eine Person die Tür 1 mittels des Türbedienhebels 4 öffnet, wird vor dem Öffnungsvorgang über die mechanische Verbindung 9 das Ventil 5 geöffnet. Die mechanische Verbindung 9 kann ausgebildet sein als ein Bowdenzug bzw. ein Seilzug, als ein Hebel-/ Gestänge-Mechanismus oder als ein Getriebe (z. B. Zahnrad)- Mechanismus oder üblicherweise bekannte Stelleinrichtungen können Verwendung finden. Der Türbedienhebel 4 sowie die mechanische Verbindung 9 sind so eingestellt, daß das Ventil 5 geöffnet wird bevor die Tür 1 entriegelt ist und sich eventuell selbst durch den Differenzdruck P - A öffnet. Ist kein Differenzdruck zwischen P und A vorhanden, erfolgt auch keine Warnung und der Bediener kann den Öffnungsvorgang fortsetzen. Ist jedoch ein Differenzdruck P - A vorhanden, kommt es zu einer Luftströmung durch den Lufteinlaß 7, das nun offene Ventil 5, das Verbindungsrohr 6 und der Pfeife 8. Die Luftströmung durch die Pfeife 8 erzeugt ein lautes Geräusch als Warnung. Mit einem derartigen akustischen Signal ist der Bediener vor einem Entriegeln und Öffnen der Tür 1 gewarnt. In Kombination mit dem akustischen Signal oder entsprechend auch als alleiniges Mittel kann durch eine geschickte Anordnung des Verbindungsrohres 6 die Luftströmung durch den Türbedienhebel 4 oder in Richtung des Bedienhebels 4 auf die Hand des Bedieners geleitet werden, wenn die Bedienung auf Seiten des niedrigeren Druckes (Außenumgebung A) erfolgt. Anstatt des Verbindungsrohres 6 sind auch jegliche andere Luftführungskanäle denkbar. Jeder Türbediener wird instinktiv das Spüren des Luftstroms und/oder das Auftreten eines lauten und überraschenden Geräuschs mit der gerade begonnenen Tätigkeit in Zusammenhang bringen und diese sofort unterbrechen. Durch den unmittelbaren Zusammenhang zwischen seiner Tätigkeit und dem auftretenden Warnsignal ist für einen Bediener der Tür der kausale Zusammenhang verständlich. In einfacher Weise kann wirkungsvoll ein Warnsignal erzeugt werden, welches auf die Gefahr eines ungewollten schlagartigen Öffnens der Tür und damit auf eine Gefährdung des Bedieners hinweist.

Es ist vorgesehen, den Türöffnungsmechanismus so auszubilden, daß nach Aktivierung der Warnanlage 10 noch ausreichend Reaktionszeit verbleibt um den Türöffnungsvorgang zu unterbrechen bevor die Tür sich öffnet oder geöffnet werden kann. In einer in Fig. 1A dargestellten Abwandlung der ersten Ausführungsform ist dafür ein zweistufiger Betätigungsmechanismus vorgesehen. Eine Klappe 4A, die den Zugang zu dem Öffnungshebel 4 freigibt, ist zuerst zu öffnen. Die mechanische Verbindung 9A zur Aktivierung der Warnanlage 10 ist mit dieser Klappe 4A verbunden, d.h. bevor der Türöffnungshebel 4 bedient wird, kann die Warnanlage 10 ein Signal zur Warnung abgeben. In einer weiteren Ausgestaltung der Erfindung kann ein zweistufiges Öffnen derartig ablaufen, daß ein Öffnen des Hebels bis zu einer ersten Position erfolgt, hier auf ein entsprechendes Signal reagiert werden kann und dann - möglicherweise nach Überwindung einer Sperre - das Öffnen der Tür erfolgt. Die erfindungsgemäße Vorrichtung 10 kann in einer weiteren Ausführungsform auch als eine Ergänzung zu vorhandenen Druckdifferenz-Warnanlagen vorgesehen sein.

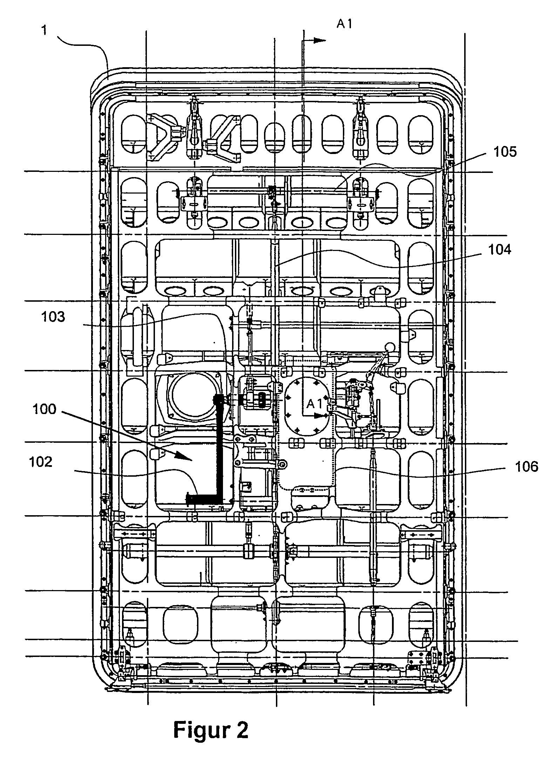

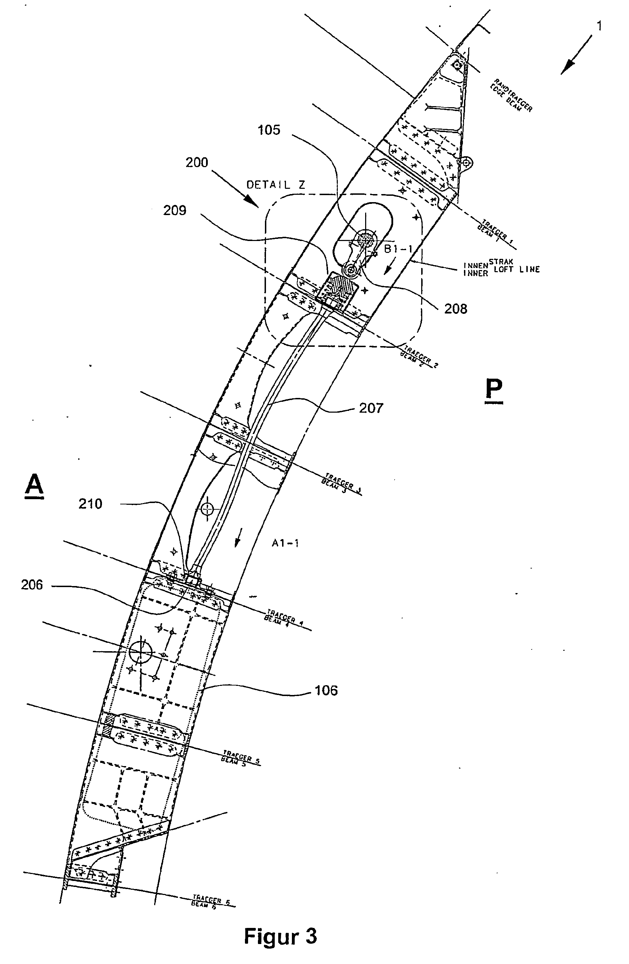

In den Figuren 2ff. ist in einer konstruktiven Umsetzung der erfindungsgemäßen Idee eine zweite Ausführungsform der Vorrichtung zum Warnen dargestellt. Figur 2 zeigt den grundlegenden strukturellen Aufbau einer Flugzeugtür 1 sowie einer Türöffnungsmechanik 100 zum Öffnen und Schließen der Flugzeugtür 1. An der Türöffnungsmechanik 100 ist erfindungsgemäß eine pneumatische Restdruckanzeige 200 als zweite Ausführungsform der Warnvorrichtung (gezeigt in Fig. 3) vorgesehen, welche eine mögliche Druckdifferenz zwischen der Flugzeugkabine eines Flugzeuges und der Umgebung signalisiert, wenn nach der Landung ein Öffnen der Flugzeugtür erfolgen soll. Die Anwendbarkeit des erfindungsgemäßen Mechanismus zum Warnen vor Differenzdruck ist aber nicht nur auf Türen begrenzt, sondern ist auch für Tore, Fenster und Klappen möglich.

Für die Türöffnung der Flugzeugtür 1 von innen ist es notwendig, den inneren Handhebel 102 nach oben zu ziehen, um die Handhebelwelle 103 in Rotation (gegen den Uhrzeigersinn) zu versetzen. Diese treibt eine Verbindungsstange 104 an, welche die Verriegelungswelle 105 ihrerseits in Rotation (im Uhrzeigersinn) versetzt. Die Drehung der Handhebelwelle 103 und der Verriegelungswelle 105 ist dabei bis auf die Drehrichtungen gleich. Der Schnitt A1-A1 in Figur 1 (siehe auch Figur 3) bezeichnet eine mögliche Position für die erfindungsgemäße Vorrichtung 200 zum Warnen vor Differenzdruck. Der Bereich des Außenhandhebelkastens 106 als mögliche Position einer Durchlaßöffnung 206 von Außenumgebung A und der Passagierkabine P innerhalb eines Flugzeugrumpfes befindet sich am unteren Ende dieser Schnittführung.

Figur 3 zeigt den kompletten Mechanismus der Warnvorrichtung 200 im Schnitt A1-A1. Er besteht aus einem am Außenhandhebelkasten 106 befestigten Flansch 210 mit einer Durchlaßöffnung 206 in den Hebelkasten 106. Vom Flansch 210 führt ein Rohr 207 zu einem Ventil 209, welches durch einen Steuerhebel 208 reguliert wird, der durch die Rotation der Verriegelungswelle 105 angetrieben wird. Das Rohr 207 kann auch in einer flexiblen Ausführung als Luftführungsschlauch/-kanal ausgebildet sein. Dreht die Verriegelungswelle 105 der Türöffnungsmechanik 100 im Zuge des Türöffnungsvorganges im Uhrzeigersinn, so öffnet der Steuerhebel 208 das Ventil 209. Die Luft strömt dann aus der Passagierkabine P durch das Ventil 209, das angeschlossene Rohr 207, die Durchlaßöffnung 206 und den unteren Flansch 210 in den Handhebelkasten 106 und von dort in die Außenumgebung A. Dabei wird am Ventil 209 ein akustisches Warnsignal, vorzugsweise ein zischendes/rauschendes Warngeräusch erzeugt. Mit einem derartigen Anschluß der Warnvorrichtung 200 an dem Außenhandhebelkasten 106 ist vorteilhaft ein Loch in der Beplankung der Flugzeugtür 1 vermieden. Ebenso von Vorteil ist der entstehende Geräuschpegel bei der Erzeugung des Zischens/Rauschens hinter einer Türinnenverkleidung (nicht gezeigt), da hierdurch auf einen Durchbruch zur Weiterleitung des Geräusches verzichtet werden kann. Die Schallisolierung der Tür wird also nicht beeinträchtigt. Das Geräusch ist überdies auch außerhalb der Kabine hörbar.

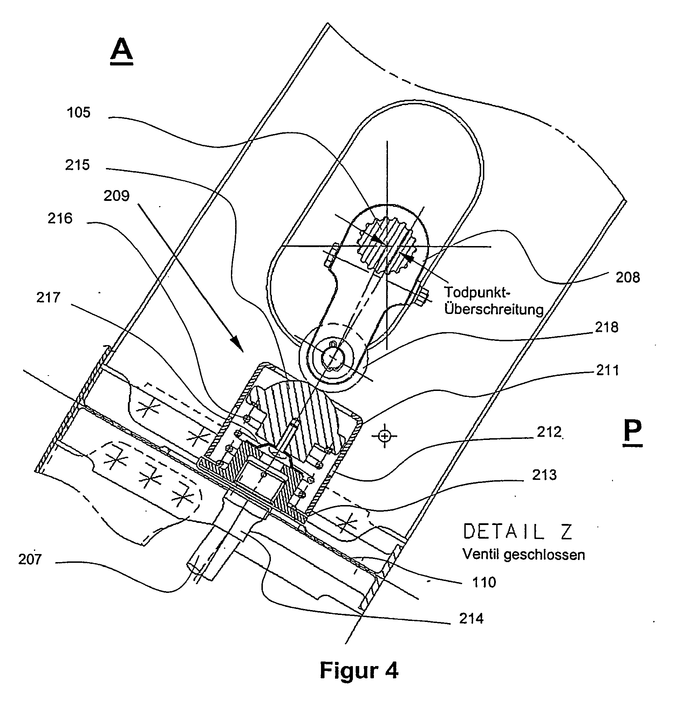

In der Figur 4 ist die genaue Wirkungsweise der Warnvorrichtung 200 anhand der vergrößerten Darstellung des Details Z gemäß Figur 3 erkennbar. Das Ventil 209 ist an der Flugzeugtürstruktur, einem Träger 110, angeordnet und wird durch den Steuerhebel 208 geöffnet oder geschlossen. Die Bewegung des Steuerhebels 208 ist direkt an die Drehung der Verriegelungswelle 105 gekoppelt. Die Figur 4 zeigt die geschlossene Position des Ventils 209, in welcher die Todpunkt-Überschreitung des Steuerhebels 208 dafür sorgt, daß die Verriegelungswelle 105 unter keinen Umständen durch die Warnvorrichtung 200 mit einem Moment belastet werden kann, das versucht die Verriegelungselemente der Türöffnungsmechanik 100 zu entriegeln. Mit der dargestellten Anordnung wird sichergestellt, daß die Verriegelung der Tür durch die Warnvorrichtung 200 nicht beeinträchtigt wird, sondern sie sogar zusätzlich zu den bereits vorhandenen Elementen unterstützt. Das Ventil 209 besteht aus dem Ventilflansch 213, in den der Verbindungsstutzen 214 zum Rohr 207 direkt eingeschraubt werden kann, einer Schraubendruckfeder 216, einem Gleitbolzen 215 mit angeschlossenem Dichtgummi 217 und einem Ventilgehäuse 211.

Die Anordnung der genannten Komponenten erfolgt so, daß die Schraubendruckfeder 216 auf dem Ventilflansch 213 zentriert wird und versucht den Gleitbolzen 215, welcher seinerseits im Ventilgehäuse 211 zentriert ist, nach oben zu drücken, um damit das Dichtgummi 217 vom Ventilflansch 13 abzuheben und somit das Ventil 209 zu öffnen. Dies wird durch den Steuerhebel 208 verhindert, an dessen freien Ende sich eine Rolle 218 befindet und welcher in der geschlossenen Position des Ventils 209 auf den Gleitbolzen 215 drückt. Anstelle der Schraubendruckfeder 216 ist auch eine Federbelastung durch andere Federarten möglich, wobei der Gleitbolzen dann entfallen kann oder durch ein anderes mechanisches Element (z.B. eine Klappe) zum Verschließen der Ausströmöffnung ersetzt wird.

Das Ventilgehäuse 211 hat vier Einströmöffnungen 212, die in Umfangsrichtung verteilt sind und nach dem Öffnen des Ventils 209 das Zischen / Rauschen als akustische Warnung erzeugen.

In geschlossener Stellung des Ventils 209 ist das Dichtgummi 217 durch den Druckunterschied zwischen Passagierkabine P und Außenumgebung A belastet. Hierdurch wird die Dichtsicherheit weiter erhöht, da das flexible Dichtgummi 217 zusätzlich zum Druck, welcher durch den Steuerhebel 208 auf den Gleitbolzen 215 ausgeübt wird, belastet ist.

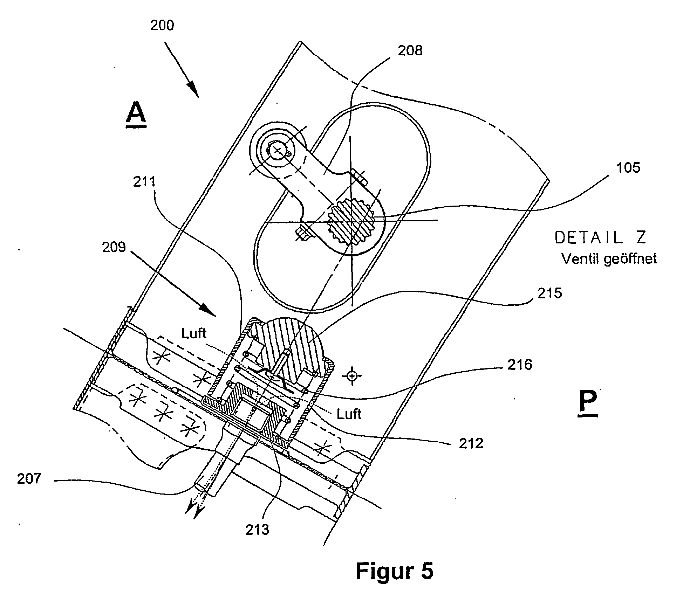

In Figur 5 ist das Ventil 209 in geöffneter Stellung gezeigt. Durch Drehung der Verriegelungswelle 105 während des Türöffnungsvorganges wird der Steuerhebel 208 in diese entriegelte Position bei Erreichen der Endposition des Innenhandhebels 102 gebracht. Diese Bewegung geschieht genauso bei Betätigung des Außenhandhebels, da bei Betätigung des Außenhandhebels der Innenhandhebel synchron mitdreht.

In dieser Stellung ist die Tür 1 durch die Elemente der Türöffnungsmechanik 100 vollständig entriegelt, angehoben und kann geöffnet werden. Da diese Position ungeeignet ist, noch eine Warnung mittels der Warnvorrichtung 200 an den Bediener zu geben, wenn ein Druckunterschied zwischen der Passagierkabine und der Außenumgebung besteht, greift die Warnung bei einer sehr viel früheren Hebelstellung ein, so daß dem Bediener genug Zeit bleibt seine Türöffnungshandlung rechtzeitig abzubrechen.

Wie aus den Figuren 4 und 5 ersichtlich ist, beginnt der Steuerhebel 208 das Ventil 209 bereits in dem Moment zu öffnen, in dem er sich aus der Todpunktlage hinaus gedreht hat und an der runden Flanke des Gleitbolzens 215 abläuft. Parallel hierzu bewegt sich der Gleitbolzen 215, angetrieben durch die Schraubendruckfeder 216, nach oben und öffnet so den Durchlaß im Ventilflansch 213. Der Steuerhebel 208 gibt also das Ventil 209 schon vollständig frei (=>Warngeräusch), wenn die Tür 1 noch nicht angehoben und noch nicht vollständig entriegelt ist. Dadurch entsteht ein Handlungsspielraum für den Bediener der Tür, in welchem er sich entscheiden kann den Türöffnungsvorgang aufgrund des vorhandenen Differenzdrucks abzubrechen.

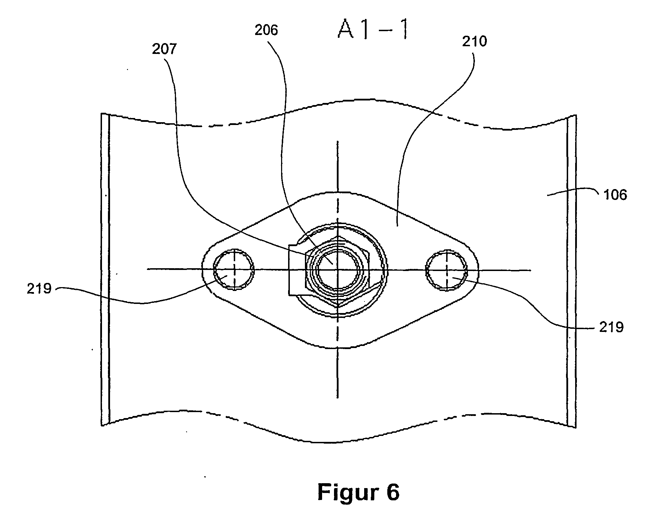

Zur weiteren erläuternden Darstellung der erfindungsgemäßen Warnvorrichtung 200 ist in Figur 6 der untere Flansch 210 in einer Draufsicht gezeigt. Mit dem Flansch 210 ist das Rohr 207 mit einer Durchlaßöffnung 206 zum Außenhandhebelkasten 106 an der Türstruktur der Passagiertür 1 positioniert und vorzugsweise mittels Befestigungsmitteln 219 verschraubt.

Es sind jedoch auch weitere Positionen an der Türstruktur denkbar, beispielsweise seitlich oder unterhalb des Außenhandhebelkastens.

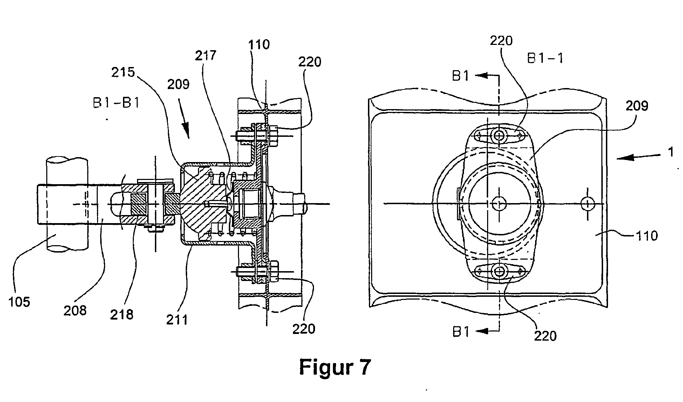

In Figur 7 ist in ergänzenden Ansichten die Befestigungsweise des Ventils 209 am Träger 110 der Türstruktur gezeigt. In der Schnittansicht B1-B1 ist das geschlossene Ventil 209 dargestellt, wobei das Schließen durch Andrücken des Gleitbolzens 215 mittels der Rolle 218 vom Steuerhebel 208 erreicht wird. In der Draufsicht sowie in der Seitenansicht ist gezeigt, daß in der gezeigten Ausführungsform als Befestigungsmittel 220 Schraubverbindungen zur Anwendung kommen.

## Patentansprüche

1. Flugzeugtür mit einer Öffnungsmechanik und einer Vorrichtung zum Warnen vor Differenzdruck beim Öffnen der druckbeaufschlagten Flugzeugtür (1) mittels der Öffnungsmechanik (4; 100, 105), wobei eine Luftführung (6; 206, 207) von der Seite mit höherem Druck (P) zur Seite mit niedrigerem Druck (A) vorgesehen ist, die durch ein Ventil (5; 209) verschließbar ist, wobei das Ventil (5 ; 209) mit einem in Wirkverbindung mit der Öffnungsmechanik (4; 100, 105) stehenden Steuerhebel (4; 208) steuerbar ist, **dadurch gekennzeichnet, daß** das Ventil beim Offnen des ventils (5; 209) und einem bestehenden Differenzdruck ein akustisches Signal erzeugt.

2. Flugzeugtür nach Anspruch 1, **dadurch gekennzeichnet, daß** das Ventil (5) mit einer Signalerzeugungseinrichtung (8) verbunden ist, beispielsweise einer Pfeife zum Erzeugen eines akustischen Signals.

3. Flugzeugtür nach Anspruch 1, **dadurch gekennzeichnet, daß** das Ventil (5) selbst Mittel zum Erzeugen eines akustischen Signals, beispielsweise ein Zischen oder Rauschen, aufweist.

4. Flugzeugtür nach einem der Ansprüche 1 bis 3, **dadurch gekennzeichnet, daß** der Steuerhebel (4) als ein Türbedienhebel ausgebildet ist, welcher über eine mechanische Verbindung (9), wie ein Bowdenzug oder ein Seilzug oder ein Hebel- / Gestänge- Mechanismus oder ein Getriebe, mit dem Ventil (5) in Wirkverbindung steht.

5. Flugzeugtür nach einem der Ansprüche 1 bis 4, **dadurch gekennzeichnet, daß** bei Betätigung des Steuerhebels (4) ein erster Zustand erreicht ist, bei dem das Ventil (5) öffnet und bei einem vorhandenem Differenzdruck ein akustisches Warnsignal vorgesehen ist.

6. Flugzeugtür nach Anspruch 5, **dadurch gekennzeichnet, daß** das Betätigen des Steuerhebels (4) in einen zweiten Zustand erfolgt, wenn kein Differenzdruck vorliegt und damit der Öffnungsvorgang fortsetzbar ist.

7. Flugzeugtür nach einem der Ansprüche 1 bis 6, **dadurch gekennzeichnet, daß** das Öffnungsmittel weiterhin eine Klappe (4A) aufweist, die den Türbedienhebel abdeckt und eine Wirkverbindung (9A) zwischen Ventil (5) und Klappe (4A) vorgesehen ist, wobei bei Betätigung der Klappe (4A) das Ventil (5) geöffnet wird.

8. Flugzeugtür nach einem der Ansprüche 1 bis 7, **dadurch gekennzeichnet, daß** die Luftführung (6) in der Flugzeugtür (1) vorgesehen ist.

9. Flugzeugtür nach einem der Ansprüche 1 bis 8, **dadurch gekennzeichnet, daß** die Luftführung (6) in einem die Flugzeugtür (1) umschließenden Türrahmen (2) vorgesehen ist.

10. Flugzeugtür nach einem der Ansprüche 1 bis 9, **dadurch gekennzeichnet, daß** die Luftführung (6) und/oder die Signalerzeugungseinrichtung (8) die Luftströmung bei einem Differenzdruck gezielt in Richtung der bedienenden Hand leitet.

11. Flugzeugtür nach einem der Ansprüche 1 bis 10, **dadurch gekennzeichnet, daß** die Luftführung als Verbindungsrohr (6) oder als ein andersartiger Luftkanal ausgebildet ist.

12. Flugzeugtür nach einem der Ansprüche 1 oder 8, **dadurch gekennzeichnet, daß** die Luftführung von der Passagierkabine (P) über eine Durchlaßöffnung (206) in der Flugzeugtür (1) im Bereich des Handhebelkastens (106) zur Außenumgebung (A) vorgesehen ist.

13. Flugzeugtür nach einem der Ansprüche 1, 8 oder 12, **dadurch gekennzeichnet, daß** die Luftführung über das Ventil (209) und einer angeschlossenen Luftführungseinrichtung (207) zur Durchlaßöffnung (206) erfolgt.

14. Flugzeugtür nach einem der Ansprüche 12 oder 13, **dadurch gekennzeichnet, daß** mittels eines Flansches (210) die Luftführungseinrichtung (207) an der Türstruktur (110) im Bereich des Handhebelkastens (106) positioniert ist.

15. Flugzeugtür nach einem der Ansprüche 1 oder 4, **dadurch gekennzeichnet, daß** der Steuerhebel (208) an seinem freien Ende mit einer Rolle (218) versehen ist, die zum Schließen des Ventils (209) einen Gleitbolzen (215) mit angeschlossener Dichtung (217) an einen Ventilflansch (213) drückt sowie zum Öffnen des Ventils (209) der federbelastete Gleitbolzen (215) durch Drehung des Steuerhebels (208) freigegeben wird und damit eine Ausströmöffnung im Ventilflansch (213) freigibt.

16. Flugzeugtür nach Anspruch 15, **dadurch gekennzeichnet, daß** die Öffnung im Ventilflansch (213), Einströmöffnungen (212) am Ventilgehäuse (211) sowie der Dichtgummi (217) zum Erzeugen eines zischenden/rauschenden akustischen Signals ausgebildet sind.

17. Flugzeugtür nach einem der Ansprüche 15 oder 16, **dadurch gekennzeichnet, daß** der Dichtgummi (217) bei einer vorhandenen Druckdifferenz in Richtung der Ausstromöffnung des Ventils (209) belastet ist und damit zusätzlich zum Druck des Gleitbolzens (215) die Öffnung verschließt.

18. Flugzeugtür nach einem der Ansprüche 1 oder 5, **dadurch gekennzeichnet, daß** der Steuerhebel (208) an der Verriegelungswelle (105) der Türöffnungsmechanik (100) angeordnet ist und durch Drehung der Verriegelungswelle (105) das freie Ende des Steuerhebels (208) in einer Kreisbahn bewegt wird, wobei ein Öffnen des Ventils (209) erfolgt bevor die Türöffnungsmechanik (100) die Flugzeugtür (1) vollständig freigibt.

19. Flugzeugtür nach einem der vorangegangenen Ansprüche, **dadurch gekennzeichnet, daß** für den geschlossenen Zustand des Ventils (209) eine Todpunkt-Überschreitung des Steuerhebels (208) auf der Bewegungsbahn des freien Endes des Hebels (208) vorgesehen ist.

## Claims

1. Aircraft door with an opening mechanism and a device for warning against differential pressure when opening the pressurised aircraft door (1) by means of the opening mechanism (4; 100, 105), an air supply (6; 206, 207) being provided from the side with higher pressure (P) to the side with lower pressure (A) which can be closed off by means of a valve (5; 209), which valve (5; 209) can be controlled by means of a control lever (4; 208) actively connected to the opening mechanism (4; 100, 105), **characterised in that** when the valve (5; 209) is opened and a differential pressure exists, the valve generates an acoustic signal.

2. Aircraft door as claimed in claim 1, **characterised in that** the valve (5) is connected to a signal generating system (8), for example a whistle for generating an acoustic signal.

3. Aircraft door as claimed in claim 1, **characterised in that** the valve (5) itself has means for generating an acoustic signal, for example a hissing sound or a noise.

4. Aircraft door as claimed in one of claims 1 to 3, **characterised in that** the control lever (4) is provided in the form of a door control lever which is actively connected to the valve (5) by means of a mechanical connection (9) such as a Bowden cable or a cable pull or a lever/rod linkage mechanism or a gear.

5. Aircraft door as claimed in one of claims 1 to 4, **characterised in that** when the control lever (4) is activated, a first state is assumed, in which the valve (5) opens and in which an acoustic warning signal is generated if a differential pressure exists.

6. Aircraft door as claimed in claim 5, **characterised in that** a second state is assumed when the control lever (4) is activated if no differential pressure exists and the opening operation can therefore continue.

7. Aircraft door as claimed in one of claims 1 to 6, **characterised in that** the opening means also has a flap (4A) covering the door control lever and an active connection (9A) is provided between the valve (5) and flap (4A) so that when the flap (4A) is activated, the valve (5) is opened.

8. Aircraft door as claimed in one of claims 1 to 7, **characterised in that** the air supply (6) is provided in the aircraft door (1).

9. Aircraft door as claimed in one of claims 1 to 8, **characterised in that** the air supply (6) is provided in a door frame (2) surrounding the aircraft door (1).

10. Aircraft door as claimed in one of claims 1 to 9, **characterised in that** the air supply (6) and/or the signal generating system (8) selectively direct the air flow in the direction of the operating hand if a differential pressure exists.

11. Aircraft door as claimed in one of claims 1 to 10, **characterised in that** the air supply is provided in the form of a connecting pipe (6) or some other type of air duct.

12. Aircraft door as claimed in one of claims 1 or 8, **characterised in that** the air supply from the passenger cabin (P) is provided via an outlet orifice (206) in the aircraft door (1) in the region of the manual lever box (106) to the external environment (A).

13. Aircraft door as claimed in one of claims 1, 8 or 12, **characterised in that** the air supply is fed via the valve (209) and a connected air supply unit (207) to the outlet orifice (206).

14. Aircraft door as claimed in one of claims 12 or 13, **characterised in that** the air supply unit (207) is positioned on the door structure (110) by means of a flange (210) in the region of the manual lever box (106).

15. Aircraft door as claimed in one of claims 1 or 4, **characterised in that** the control lever (208) is provided with a roller (218) on its free end, which presses a sliding bolt (215) with adjoining gasket (217) against a valve flange (213) in order to close the valve (209), and in order to open the valve (209), the spring-biased sliding bolt (215) is released by rotating the control lever (208), thereby releasing an outlet orifice in the valve flange (213).

16. Aircraft door as claimed in claim 15, **characterised in that** the opening in the valve flange (213), inlet orifices (212) on the valve housing (211) and the sealing gasket (217) are provided as a means of generating a hissing sound/noise acoustic signal.

17. Aircraft door as claimed in one of claims 15 or 16, **characterised in that** the sealing gasket (217) is biased in the direction of the outlet orifice of the valve (209) when a pressure differential exists and thus closes off the orifice in addition to the pressure of the sliding bolt (215).

18. Aircraft door as claimed in one of claims 1 or 5, **characterised in that** the control lever (208) is disposed on the bolt shaft (105) of the door opening mechanism (100) and the free end of the control lever (208) is moved in a circular track when the bolt shaft (105) is rotated, causing the valve (209) to open before the door opening mechanism (100) fully releases the aircraft door (1).

19. Aircraft door as claimed in one of the preceding claims, **characterised in that** in order for the valve (209) to assume the closed state, the control lever (208) must overcome a dead centre on the displacement track of the free end of the lever (208).

## Revendications

1. Porte d'avion avec un mécanisme d'ouverture et un dispositif pour avertir de l'existence d'une pression différentielle lors de l'ouverture de la porte d'avion (1) sous pression par l'intermédiaire du mécanisme d'ouverture (4 ; 100, 105) avec, allant du côté à plus haute pression (P) au côté à plus basse pression (A), un guidage d'air (6 ; 206, 207) qui peut être obturé par une soupape (5 ; 209) pouvant être actionnée au moyen d'un levier de commande (4 ; 208) en liaison active avec le mécanisme d'ouverture (4 ; 100, 105), **caractérisée en ce que** quand la soupape (5 ; 209), s'ouvre et qu'il existe une différence de pression, la soupape produit un signal acoustique.

2. Porte d'avion selon la revendication 1, **caractérisée en ce que** la soupape (5) est reliée à un dispositif (8) de production de signal, par exemple un sifflet pour produire un signal acoustique.

3. Porte d'avion selon la revendication 1, **caractérisée en ce que** la soupape (5) elle-même comprend des moyens pour produire un signal acoustique, par exemple un sifflement ou un bruissement.

4. Porte d'avion selon une des revendications 1 à 3, **caractérisée en ce que** le levier de commande (4) a la forme d'un levier de manoeuvre de porte qui est en liaison active avec la soupape (5) par l'intermédiaire d'une liaison mécanique (9) telle qu'un câble Bowden ou un câble de traction ou un mécanisme à levier ou à tringle ou une transmission.

5. Porte d'avion selon une des revendications 1 à 4, **caractérisée en ce que** quand le levier de commande (4) est actionné, est atteint un premier état dans lequel la soupape (5) s'ouvre, et s'il existe une différence de pression un signal acoustique d'avertissement est prévu.

6. Porte d'avion selon la revendication 5, **caractérisée en ce que** l'actionnement du levier de commande (4) l'amène dans un second état quand il n'y a aucune différence de pression, et ainsi l'opération d'ouverture peut être poursuivie.

7. Porte d'avion selon une des revendications 1 à 6, **caractérisée en ce que** le moyen d'ouverture présente de plus un clapet (4A) qui recouvre le levier de manoeuvre de la porte, et il est prévu une liaison active (9A) entre la soupape (5) et le clapet (4A) faisant que l'actionnement du clapet (4A) entraîne l'ouverture de la soupape (5).

8. Porte d'avion selon une des revendications 1 à 7, **caractérisée en ce que** le guidage d'air (8) est prévu dans la porte d'avion (1).

9. Porte d'avion selon une des revendications 1 à 8, **caractérisée en ce que** le guidage d'air (6) est prévu dans un cadre de porte (2) entourant la porte d'avion (1).

10. Porte d'avion selon une des revendications 1 à 9, **caractérisée en ce que** le guidage d'air (6) et/ou le dispositif de production de signal (8) en présence d'une différence de pression, conduit l'écoulement d'air de manière ciblée en direction de la main d'actionnement.

11. Porte d'avion selon une des revendications 1 à 10, **caractérisée en ce que** le guidage d'air a la forme d'un tube de liaison (6) ou d'un canal d'air d'un autre genre.

12. Porte d'avion selon la revendication 1 ou 8, **caractérisée en ce que** le guidage d'air est prévu partant de la cabine de passagers (P) pour aboutir à l'environnement externe (A) en traversant une ouverture de passage (206) réalisée dans la porte d'avion (1) dans la zone du boîtier de levier de commande manuelle (106).

13. Porte d'avion selon une des revendications 1, 8 ou 12, **caractérisée en ce que** le guidage d'air est assuré par la soupape (209) et par un dispositif de guidage d'air raccordé conduisant à l'ouverture de passage (206).

14. Porte d'avion selon la revendication 12 ou 13, **caractérisée en ce que** le dispositif de guidage d'air (207) est positionné par l'intermédiaire d'une bride (210) sur la structure de porte (110) dans la zone du boîtier de levier de commande manuelle (106).

15. Porte d'avion selon la revendication 1 ou 4, **caractérisée en ce que** le levier de commande (208) porte à son extrémité libre un galet (218) qui, pour fermer la soupape (209), pousse sur une bride de soupape (213) un axe glissant (215) auquel est raccordé un joint d'étanchéité (217), et pour ouvrir la soupape (209), l'axe glissant (215) chargé élastiquement est libéré par rotation du levier de commande (208), ce qui dégage une ouverture d'écoulement dans la bride de soupape (213).

16. Porte d'avion selon la revendication 15, **caractérisée en ce que** l'ouverture dans la bride de soupape (213), les ouvertures d'entrée d'écoulement (212) sur le boîtier de soupape (211) ainsi que le joint d'étanchéité en caoutchouc (217) sont constitués de manière à produire un signal acoustique du genre sifflement ou bruissement.

17. Porte d'avion selon la revendication 15 ou 16, **caractérisée en ce que** le joint d'étanchéité en caoutchouc (217) quand il existe une différence de pression, est chargé en direction de l'ouverture d'échappement de la soupape (209), et ainsi obture l'ouverture en plus de l'action de la poussée de l'axe glissant (215).

18. Porte d'avion selon la revendication 1 ou 5, **caractérisée en ce que** le levier de commande (208) est monté sur l'arbre de verrouillage (105) du mécanisme d'ouverture de porte (100), la rotation de cet arbre (105) déplaçant l'extrémité libre du levier de commande (208) dans une piste circulaire, de sorte que l'ouverture de la soupape (209) a lieu avant que le mécanisme d'ouverture de porte (100) libère totalement la porte d'avion (1).

19. Porte d'avion selon une des revendications précédentes, **caractérisée en ce que** pour l'état fermé de la soupape (209), il est prévu un dépassement du point mort du levier de commande (208) sur la piste de déplacement de l'extrémité libre du levier (208).
